# EUROPEAN PATENT APPLICATION

(11) **EP 1 209 878 A2**
(43) Date of publication of application: **29.05.2002**
(21) Application number: 01127235.8
(22) Date of filing: 16.11.2001
(51) Int. Cl.: H04L 29/12

(54) **Motor vehicle communication protocol with automatic device address assignment**

(30) Priority: 28.11.2000 US 723991
(71) Applicant: EATON CORPORATION, Cleveland, Ohio 44114-2584 (US)
(72) Inventor: Skibinski, Joseph Robert, Hubertus, Wisconsin 53033 (US); Trainor, James E., Marion, Iowa 52302 (US); Reed, Chad, Marion, Iowa 52302 (US)
(74) Representative: Schwan - Schwan - Schorer

(57) **Abstract**

Devices on a communication bus enter a Ring Mode during which a master device assigns addresses to slave devices on the bus. In the Ring Mode, each slave device repeatedly attempts to send a first message informing the master device of the existence of that particular slave device. This mode includes a procedure for resolving collisions messages on the communication bus. After addresses have been assigned to all of the slave devices, a Master/Slave Mode commences. In this latter mode, each slave device sends messages over the communication bus only in response to a request from the master device.

## Description

### Background of the Invention

The present invention relates to on-board computer networks in a motor vehicle; and more particularly to communication protocols by which devices exchange messages over such networks.

Computer systems are incorporated into motor vehicles, such as long haul semi-trailer trucks for engine control, transmission operation, logging driver data and truck maintenance information and occupant comfort systems for example. The various computers are connected to a communication network that runs throughout the truck for the exchange of data and commands. The Society of Automotive Engineers (SAE) has promulgated several standards relating to the communication networks and messaging protocols for use in motor vehicles.

Every device that is connected to the communication network is assigned a unique address. Each message sent on the network typically carries the address of the intended recipient and the address of the sender. A default recipient address may be employed to broadcast a message to all the devices on the network. The devices listen to the network for messages designating their address or the broadcast default address as the recipient.

The addresses typically are assigned by a technician setting a series of switches during installation of the module. Alternatively, the technician may program the address into the memory of the device by connecting a personal computer to the device prior to installation. Care must be taken that the same address is not assigned to more than one device on the same network. Thus, if an after market device is added to the motor vehicle the technician must first determine an unassigned address to assign to the new device.

The greater the number of devices that are coupled to the network, the greater the likelihood that one of the devices may be configured with an incorrect or duplicate address. Accordingly it is desirable to provide an apparatus and method by which the address of each device can be set automatically.

### Summary of the Invention

A motor vehicle has numerous devices which exchange messages over a communication network, wherein one of the devices is designated as a master device and the others are slave devices. In order to be able to exchange messages in a Communication Mode, each device first must be assigned a unique address in a Ring Mode of operation.

The Ring Mode commences by broadcasting a predefined message over the communication bus. Each of the slave devices upon receiving the predefined message, transmits a first message containing an identifier of the respective slave device. In the preferred embodiment, that identifier is at least a portion of the serial number for the particular slave device.

When the master device receives a first message, it replies by transmitting a second message on the communication bus. The second message contains the identifier from the first message that was received by the master device and contains a unique device address. Upon receiving a second message containing its identifier, the respective slave device stores the unique device address from that second message as the address assigned to that respective slave device.

Another aspect of the present invention relates to a procedure for resolving collisions between first messages sent on the communication bus simultaneously by different slave devices. In this procedure, each slave device waits a given interval of time before sending a first message. After sending a first message, the slave device listens to the communication bus for a collision with another first message. When a collision is heard, the slave device waits another given interval of time before again sending a first message. Each time that the slave module has to wait, a new length for the given interval of time is calculated. In the preferred embodiment, a portion of each slave device's serial number is used in that calculation to provide a degree of randomness so that it will be unlikely that the devices that sent the colliding first messages will calculate the same length for the next given interval of time.

In the preferred implementation of the Communication Mode, each slave device transmits messages over the communication bus only in response to a request from the master device. The present communication method includes a specific sequence for an exchange of message frames that are used by the master to send data to a slave device and to obtain data from a slave device.

### Brief Description of the Drawings

FIGURE 1 is a block schematic diagram of an exemplary motor vehicle computer system in which the present invention is implemented;
FIGURE 2 is a diagram of the circuitry of an intelligent indicator device that is connected to the computer system;
FIGURES 3A and 3B depict message frames that are exchanged between devices on the computer system during a mode in which addresses are assigned to the devices;
FIGURE 4 illustrates the generic format used to send messages after addresses have been assigned;
Figure 5 is a flowchart of the procedure by which the network server sends data to another device of the computer system; and
Figure 6 is a flowchart of the procedure by which the network server obtains data from a device.

### Detailed Description of the Invention

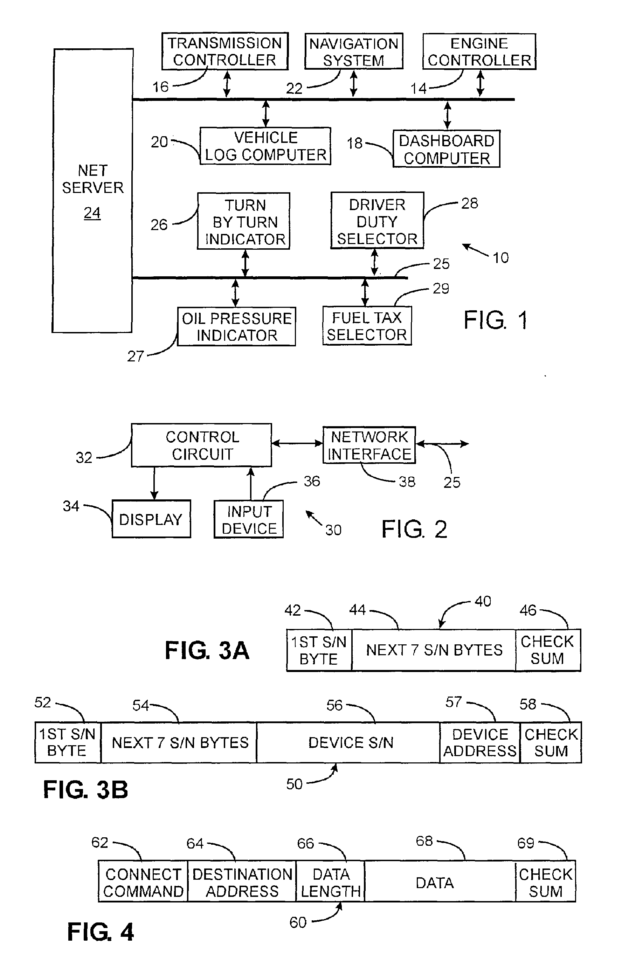

With initial reference to Figure 1, the electronic control circuits for a large truck are connected to a computer system 10 which includes a first communication network 12, which may conform to any of several standard bus protocols, such the J1939 or J1587 standards promulgated by the Society of Automotive Engineers (SAE). The communication network 10 runs throughout the vehicle and links intelligent sensors and computers with electromechanical and electrical components. The exemplary first communication network 12 is connected to an engine controller 14 which receives input signals from various sensors and responds by operating actuators that control specific engine functions. A transmission controller 16 on the first communication network 12 supervises operation of the transmission that couples the engine to the rear axle of the truck.

Components on the dashboard which display vehicle operating information, such as speed, engine RPM and warning indications, are interfaced to a dashboard computer 18 that receives information from sensing circuits and other controllers connected to the communication network 10. Governmental regulations require that the driver keep a log of driving activity and fuel tax calculations. This information is stored and tabulated within a driver log computer 20, as will be described.

A navigation system 22 based on the Global Positioning System (GPS) also is connected to the communication network 10. A GPS module periodically receives signals from several earth satellites and uses those signals to determine the exact location of the truck. The truck's location then is employed by other segments of the navigation system 22 to plot the best route for the truck to take to a destination that is designated by the driver and provide driving instructions to that destination.

As noted previously, many of these computerized devices, for example, the engine controller 14 and transmission controller 16, exchange information with each other over the communication network 12. For that data exchange, each device 14-22 on the communication network 12 has a unique address assigned to it. Data and commands are sent as a message packet addressed to a particular recipient device on the network. The message packet transmitting data contains the network addresses of the intended recipient and the originator, an identification of the data parameter (e.g. voltage, coolant temperature, brake system pressure), and the value of that data parameter. Each network device 14-22 listens for message packets that contain its address in the recipient field of the message packet. Upon hearing an appropriately addressed message, the given device stores the packet for further processing.

The communication network 12 also is connected to a net server 24 which, along other functions, handles the exchange of data with a plurality of indicator/selector devices 26-29 that are connected to a driver interface bus 25. The indicator/selector devices 26-29 are incorporated into the vehicle's dashboard in addition to standard indicators connected directly to the dashboard computer 18. These devices are compact and occupy the same amount of space as a standard rocker switch, commonly used on truck dashboards.

Some of the indicator/selector devices serve only as indicators of a specific vehicle operating parameter, such as temperature, pressure, or voltage. For example, indicator/ selector device 27 is a bar graph which indicates oil pressure. The turn-by-turn indicator device 26 receives data from the navigation system and indicates to the driver whether the truck should be driven straight ahead or turn left or right. Conventional navigation systems utilize a two dimensional image display to present a map indicating the route that the vehicle is to follow. However, that display requires that the driver turn away from viewing the road and study the map to learn the indicated route, which can be potentially hazardous. The simplified turn-by-turn indicator device 26 utilizes left and right turn arrows, as well as a straight ahead arrow to indicate the driving direction.

Other indicator/selector devices 28-29 provide both a display and a driver operable input device. For example, long-haul trucks pay highway use taxes to each state of the United States based on the number of miles driven in those states which requires accurate records of the truck's travel. The fuel tax selector device 29 indicates the current state in which the truck is located and provides an input mechanism by which the driver indicates when the truck enters another state. This information is sent via networks 12 and 25 and the net server 24 to the vehicle log computer 20 that records the cumulative miles driven in each state using a signal from the vehicle's odometer.

Governmental regulations specify the maximum amount of time that the driver is allowed to continuously operate the truck and the amount of time that the driver must rest between periods of operation. Such regulations require drivers to keep a log of their operating and rest periods in order to verify compliance with the regulations. This process can be automated by the driver duty selector device 28 with a display that presents designations of different driver and the vehicle activities, for example driving, resting, and vehicle idling. The driver is able to select among these activities and the selection is set to the vehicle log computer 20 which uses a real-time clock to record the time period of each activity thus automating the driver's log.

With reference to Figure 2, the electronic circuitry 30 of a typical indicator/selector device 26-29 includes a control circuit 32 which comprises a conventional microcomputer, memory for storing programs and the data utilized by the microcomputer and input/output circuits for interfacing external components to the microcomputer. Some of the input/output circuits produce signals which operate a display 34. The circuitry for indicator/selector devices 28 and 29 also includes one or more input devices 36 by which the truck operator can select a particular function to be performed. The control circuit 32 is connected to the driver interface bus 25 by a network interface circuit 38 which converts the data between the parallel format utilized by microcomputer 32 and the serial format of the communication bus.

The net server 24 controls acts as a master device which gathers data from the indicator/selector devices 26-29 acting as slave devices. Net server 24 conveys the gathered data to the respective controller on the communication network 12. That data exchange employs a unique communication protocol and a unique procedure by which addresses are assigned to each device on the driver interface bus 25.

With continuing reference to Figure 1, whenever power has been removed and then reapplied to the computer system 10, the net server 24 initiates an address assignment process for the other devices 26-29 which are connected to the driver interface bus 25. This process commences by the net server sending eight consecutive escape characters over the driver interface bus 25, which causes all of the other devices on the bus to enter the "Ring Mode." Alternatively, when a new device is added to the network, it may initiate the address assignment process by sending the sequence of eight escape characters over the driver interface bus.

When each of the devices, indicator/selector devices 26-29, on the driver interface bus 25 hears the sequence of eight escape characters, that device enters a "Ring Mode." In that mode, all of the devices attempt to place a Ring Mode Message Frame on the driver interface bus to which the net server 24 will respond by assigning a unique address to that device. The Ring Mode Message Frame 40 is depicted in Figure 3A and commences with a first field 42 that contains the first byte of the serial number (S/N) of the device sending the message frame. This serial number is stored within the memory of the device's control circuit 32 and the first byte of the serial number denotes the type of the device. It should be noted that there will only be one of each type of device connected to the driver interface bus 25. That is, there would be one turn-by-turn indicator 26, one driver duty selector 28, etc. As a result, the first byte of the serial number of each device on the bus 25 will be unique. The remaining seven bytes of the device's serial number are placed in a second field 44 of the Ring Mode Message Frame 40 which has a culminating field 46 that contains a conventional check sum.

Upon hearing the sequence of eight escape characters each device listens to determine if the driver interface bus 25 is idle for at least a "quiet bus time" that is calculated by the device. The quiet bus time interval is initially determined utilizing the first byte of the devices's serial number which is stored in the memory of the control circuit 32. The calculation is performed by dividing the first byte of the devices serial number by eight and saving the remainder. A value of one is added to the remainder which produces a number between one and eight. This number is multiplied by ten times the data bit interval used to communicate over the bus. The resultant value is the initial amount of quiet bus time for this particular network device. Because each network device has a unique first byte in its serial number, each device will have a unique initial bus quiet time, which will minimize the likelihood of collisions occurring between messages in the Ring Mode.

After the expiration of its bus quiet time, each device begins to send a Ring Mode Message Frame onto the driver interface bus 25. After transmitting the first byte of the frame, the device listens to hear that byte on the bus. If another byte or a garbled signal is heard, as may occur when another device is attempting to transmit at the same time, the device stops transmitting the Ring Mode Message Frame and waits for another quiet bus time before attempting to transmit the Ring Mode Message Frame again. This process repeats for up to five times until a collision does not occur.

If the entire Ring Mode Message Frame has not been sent after five attempts, the device calculates a new bus quiet time interval using the next byte of its serial number and delays for the new amount of time before attempting to send the Ring Mode Message Frame. The device keeps repeating this process until either the Ring Mode Message Frame is sent successfully or all of the bytes in the serial number have been used without succeeding, at which point the device goes silent. However, it is unlikely that a given device will encounter a message collision throughout all of those attempts. Eventually, the device should be able to transmit its Ring Mode Message Frame without colliding with a message from another device.

When the net server 24 receives a Ring Mode Message Frame 40, it responds with a Ring Mode Answer Frame that contains a device address for the device that sent the Ring Mode Message Frame. The net server 24 has a default address 00 and thus will assign address 01 to the first device from which it receives a Ring Mode Message Frame, and will assign incrementally greater addresses to the device associated with each subsequently received Ring Mode Message Frame.

The format of the Ring Mode Answer Frame 50 is depicted in Figure 3B and commences with a field 52 that contains the first byte of the serial number for the net server 24. The remaining seven bytes of the net server's serial number is inserted in a second field 54. The Ring Mode Answer Frame 50 has a subsequent field 56 that contains the entire serial number of the bus device 26-29 to which the net server 24 is responding. This serial number was obtained from the most recently received Ring Mode Message Frame 40. The next field 57 of the Ring Mode Answer Frame 50 contains a one byte address which is being assigned to the particular bus device. It should be understood that field 57 may be longer than one byte in order to accommodate a greater number of devices on the driver interface bus 25. The Ring Mode Answer Frame 50 then culminates with a check sum in field 58.

After a device on the driver interface bus 25 has sent a Ring Mode Message Frame 40, it the listens for a Ring Mode Answer Frame 50 which contains its serial number in field 56. Upon receiving such a Ring Mode Answer Frame, the device obtains the address from field 57 of that message and stores the address in its control circuit memory 32. Once a device has an address assigned, it ceases communicating over the driver interface bus during the Ring Mode.

However, should a device not receive a Ring Mode Answer Frame for a given period of time (e.g. 5 msec) after having transmitted its Ring Mode Message Frame 50, the device transmits another Ring Mode Message Frame over the driver interface bus.

The net server 24 remains in the Ring Mode until it observes silence on the driver interface bus 25 for a predetermined amount of time (e.g. 10 msec). All the other (slave) devices, remain in the Ring Mode until either: (1) a Ring Mode Answer Frame is received, (2) a predefined number of unsuccessful attempts to send a Ring Mode Message Frame over the bus, or (3) the device hears silence on the bus for the predetermined amount of time.

Upon leaving the Ring Mode, the bus devices enter a Master/Slave Mode of operation in which the net server 24 acts as the master and the other devices 26-29 on the driver interface bus 25 are slaves which communicate only in response to a request from the master device.

During master/slave operation, the messages sent over the driver interface bus 25 have the format depicted in Figure 4. This message frame 60 has a first field 62 that contains a one byte, connect command which designates the type of message. As will be described in greater detail, the connect commands comprise Request To Send, Clear To Send, Start Of Text, and End Of Message. Then the message frame 60 contains a field 64 for the address of the destination device that is to receive the message. This contains a device address that was assigned during the Ring Mode of operation. Next is a field 66 that is two bytes long that specifies the length of the data being sent in terms of the number of bytes. The data length field 66 is followed by the data field 68 and the message frame 60 concludes with a check sum field 69.

In the master/slave mode of operation, this message frame 60 is employed to exchange data between the net server 24 and the indicator selector devices 26-29 which are the slave devices on the driver interface bus 25.

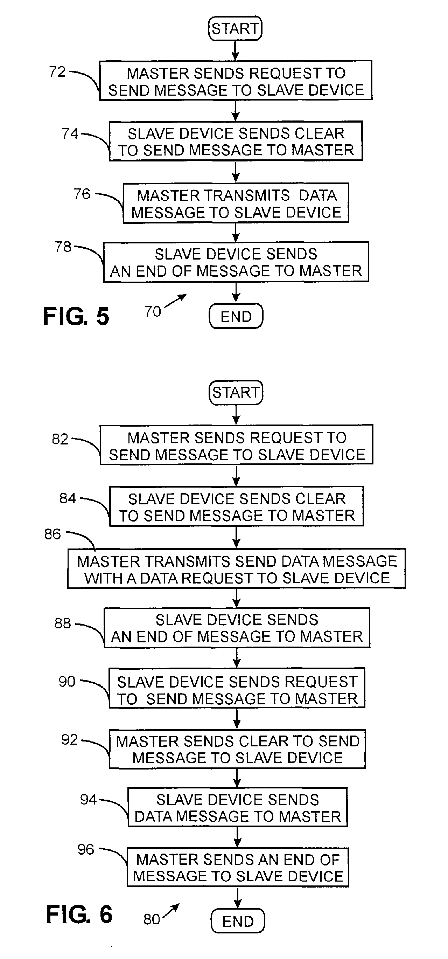

Figure 5 illustrates the process by which the net server 24, acting as the master, sends data to one of the slave devices, indicator selector devices 26-29. This data may be information from one of the controllers on the communication network 12 to be displayed by an indicator/selector device. For example, this information may designate the oil pressure to be indicated by device 27 or a direction indication for the turn-by-turn indicator 26. The procedure 70 for the Send Data Mode commences at step 72 with the net server 24 sending a Request To Send message to the slave device that is to receive the data. This message frame contains the Request To Send connect command and the address of the intended recipient in the destination address field 64 (Figure 4). The data field 68 designates the number of bytes of data that subsequently will be transmitted to the recipient device. Upon receiving the Request To Send message frame, the recipient device 26-29 responds at step 74 by sending a Clear To Send message back to the master device, net server 24. This message frame contains the code for the Clear To Send connect command, a zero destination address indicating that the message frame is destined for the net server 24, and a predefined set of bits in the data length and the data fields.

Upon receipt of the Clear To Send message frame, the net server 24 responds at step 76 with a message frame containing the data for the recipient device on the driver interface bus 25. This message frame contains the connect command for Start Of Text and the destination address of the intended recipient device. After the recipient device has received the data, it transmits a message frame with the End Of Message connect command to indicate that the data was satisfactorily received at step 78. This End Of Message frame does not contain any data.

The present system 10 also employs a novel procedure for gathering data from the devices on the driver interface bus 25, such as indicator/selector devices 26-29, in a time efficient manner. This process commences with a query mode in which the net server 24, which is the master device on the bus, seeks a response from the other bus devices indicating whether their status has changed since the previous query, i.e. whether the device has new data to send. For example, if the driver has activated an input device on one of the indicator/selector devices 26-29, its status has changed and data associated with that entry will be gathered by the net server 24. In this Query Mode, the net server 24 sends a message with a Request To Send connect command that is addressed to a particular bus device. In this message, the length of data field contains all zeros, and thus the data field does not exist.

Upon receipt, the recipient device recognizes this Query Mode Message Frame and replies by sending a Query Mode Answer Frame via the bus 25. This latter message frame contains a Clear To Send connect command and a zero destination address indicating that it is intended for the master device, the net server 24. A single byte of data is transmitted with the byte having either a value of zero to indicate that the status of the device has not changed, or a value of one indicating a status change. The message frame culminates with the standard check sum. This query process is repeated for each active device on the driver interface bus 25.

At the completion of the Query Mode, the net server 24 identifies each of the selector/indicator devices 26-29 whose status has changed since the previous Query Mode. The devices whose status has changed can be prioritized by the net server 24 so that the ones associated with time critical functions are accessed first. For example, a device on the bus may contain data for controlling a safety related component, such as air bags or the braking system. In that case, data from those devices should be obtained before data from less time critical devices, such as the fuel tax selector device 29. The type of device as indicated by the first byte of its serial number can be used to determine data acquisition priority. Once the devices with new data to be gathered have been prioritized, the net server 24 sets about requesting the data from those devices in the Receive Data Mode.

The sequence of messages that are exchanged in the Receive Data Mode is depicted by the flow chart of Figure 6. Since the communication via the driver interface bus 24 employs a master/slave protocol, the master must send each device a command to send its data over the bus. Therefore, the first steps 82-88 of the data acquisition procedure 80 are similar to the steps of the Send Data Mode, described previously. However, rather than sending data to the recipient device, the Receive Data Mode procedure sends a command instructing the recipient device to send its data to the net server 24.

Specifically this procedure commences at step 82 where the bus master, net server 24, sends a Request To Send message frame and the recipient slave device responds by sending a Clear To Send message frame to the master at step 84. At step 86, the master then transmits a Start Of Text message frame to the slave device that contains a data request instruction in the data field 68. Upon receiving that message frame, the respective indicator/selector device responds by transmitting an End Of Message frame to the master at step 88.

At the completion of that sequence of message frames, the recipient device carries out the data request instruction by transmitting a Request To Send message to the net server 24 at step 90. The data field 68 of that message frame identifies the number of bytes of data that the slave device has to transmit. The net server 24 responds at step 92 by sending the associated slave device a message frame containing the Clear To Send connect command to which the slave device replies with a Start Of Text message frame that contains the newly changed data for the net server 24. When that data has been satisfactorily received, the net server at step 96 sends a message frame with the End Of Message connect command back to the correspondent device, thereby terminating the data acquisition procedure 80. The data acquisition procedure is repeated for another slave device on the driver interface bus 25 as may be required.

Upon receipt of data the net server determines the type of device that sent the data and thus the corresponding device on the communication network 12 that should receive the data. For example, if the data was transmitted from the fuel tax selector device 29, the net server 24 will send that data for recording in the vehicle log computer 20.

## Claims

1. A method for exchanging messages over a communication bus among a master device and a plurality of slave devices:
broadcasting a predefined message over the communication bus;
each one of the plurality of slave devices upon receiving the predefined message, transmitting a first message over the communication bus, the first message containing an identifier associated with the respective one of the plurality of slave devices;
upon receiving a first message, the master device transmitting a second message over the communication bus, the second message containing the identifier from the first message that was received and containing a unique device address; and
each respective slave device, upon receiving a second message containing the identifier associated with that slave device, stores the unique device address.

2. The method as recited in claim 1 wherein each given slave device of the plurality of slave devices transmitting a first message comprises:
the given slave device waiting for an interval of time; and
then sending the a first message over the communication bus.

3. The method as recited in claim 1 further comprising:
a given slave device detecting whether a collision occurs between the first message sent by the given slave device and another message on the communication bus; and
if a collision is detected, the given slave device waiting for an interval of time and thereafter again transmitting a first message over the communication bus.

4. The method as recited in claim 1 further comprising a given slave device:
(a) detecting whether a collision occurs between the first message sent by the given slave device and another message on the communication bus;
(b) upon detecting a collision, waiting for an interval of time;
(c) thereafter again transmitting a first message over the communication bus; and
(d) repeating steps (a) through (c) for a predefined number of times until a collision is not detected.

5. The method as recited in claim 4 wherein each time that the given slave device awaits, a length of the interval of time is recalculated.

6. The method recited in claim 1 further comprising after each one of the plurality of slave devices has been assigned an address, entering a Master/Slave Mode in which each of the plurality of slave devices transmits over the communication bus only in response to a request from the master device.

7. The method as recited in claim 6 wherein, in the Master/Slave Mode, the master device obtains data from the plurality of slave devices by a process that comprises:
a query mode during which the master device sends a query message to each of the plurality of slave devices, and each of the plurality of slave devices responds to the query message with a reply message that indicates whether a given slave device has recently accumulated data that was acquired since a previous query message was received; and
a data transfer mode during which the master device sends a request for data message to only the given slave devices with recently accumulated data that has changed, and each of the given slave devices responding to the request for data message with a data message containing the recently accumulated data.

8. The method as recited in claim 7 wherein the data transfer mode comprises:
the master device transmitting a request to send message frame to a particular slave device;
the particular slave device responds to the request to send message frame by transmitting a clear to send message frame to the master device;
the master device transmitting a command message frame which instructs the particular slave device to send data over the communication bus;
the particular slave device responds to the command message frame by transmitting an end of message frame to the master device;
the particular slave device transmitting a request to send message frame to the master device;
the master device responds to the request to send message frame by transmitting a clear to send message frame to the particular slave device;
the particular slave device transmitting the data over the communication bus to the master device; and
the master slave device responds to receiving the data by transmitting an end of message frame to the particular slave device.

9. A method for exchanging messages over a communication bus among a master device and a plurality of slave devices:
broadcasting a predefined message over the communication bus;
(a) upon receiving the predefined message, a given slave device transmitting a first message over the communication bus, the first message containing an identifier associated with the given slave device;
(b) the given slave device detecting whether the first message collided with another message on the communication bus and if so, performing a collision avoidance procedure;
(c) the master device upon receiving a given first message, transmitting a second message over the communication bus, the second message containing the identifier from the given first message and containing a unique device address; and
(d) given slave device, upon receiving a second message containing the identifier associated with that given slave device, stores the unique device address.

10. The method as recited in claim 9 wherein the given slave device transmitting a first message comprises:
the given slave device waiting for an interval of time; and
then sending the a first message over the communication bus.

11. The method as recited in claim 9 wherein the collision avoidance procedure comprises the given slave device waiting for an interval of time, and thereafter again transmitting a first message over the communication bus.

12. The method as recited in claim 9 wherein the collision avoidance procedure comprises:
(e) the given slave device waiting for an interval of time;
(f) thereafter again transmitting a first message over the communication bus;
(g) detecting whether the first message collided with another message on the communication bus; and
(h) repeating steps (e) through (g) for a predefined number of times unless a collision is not detected.

13. The method as recited in claim 12 wherein waiting for an interval of time comprises the given slave device calculating an amount of time, and waiting for the amount of time.

14. The method recited in claim 13 wherein calculating an amount of time uses at least a portion of a serial number for the given device.

15. A method for exchanging messages over a communication bus among a master device and a plurality of slave devices:
entering a Ring Mode in which a unique address is assigned to each of the plurality of slave devices, the Ring Mode comprising steps of:
(a) broadcasting a predefined message over the communication bus,
(b) upon receiving the predefined message, a given slave device transmitting a first message over the communication bus, wherein the first message contains an identifier of the given slave device that sent the first message,
(c) resolving collisions between the first messages sent by different ones of the plurality of slave devices, and
(d) in response to receiving a first message, the master device replying with a second message that contains the identifier from the respective first message and containing a unique device address;
(e) each slave device, upon receiving a second message containing the identifier associated with that respective slave device, stores the unique device address; and
after all of the plurality of slave devices have been assigned an address, entering a Master/Slave Mode in which each of the plurality of slave devices transmits over the communication bus only in response to a request from the master device.

16. The method as recited in claim 15 wherein operation in the Master/Slave Mode comprises steps of:
the master device sending a particular slave device a request for data message, and
the particular slave device responding to the request for data message by transmitting a message with the data to the master device.

17. The method as recited in claim 15 wherein, in the Master/Slave Mode, the master device obtains data from the plurality of slave devices by a process that comprises:
a query mode during which the master device sends a query message to each of the plurality of slave devices, and each of the plurality of slave devices responds to the query message with a reply message that indicates whether a given slave device has recently acquired data that accumulated since a previous query message was received; and
a data transfer mode during which the master device sends a request for data message to only the given slave devices with recently acquired data that has changed, and each of the given slave devices responding to the request for data message with a data message containing the recently acquired data.

18. A method for exchanging messages over a communication bus among a master device and a plurality of slave devices, said method comprising:
a query mode during which the master device sends a query message to each of the plurality of slave devices, and each of the plurality of slave devices responds to the query message with a reply message that indicates whether a given slave device has recently acquired data that accumulated since a previous query message was received; and
a data transfer mode during which the master device sends a request for data message to only the given slave devices with recently acquired data that has changed, and each of the given slave devices responding to the request for data message with a data message containing the recently acquired data.

19. The method as recited in claim 18 further comprising upon completion of the query mode, the master device determining an order in which data is to be obtained from the slave devices with recently acquired data, wherein the order is based on a predefined priority of the slave devices; and wherein data is acquired in the data transfer mode from the slave devices in that order.

20. The method as recited in claim 18 wherein the data transfer mode comprises:
the master device transmitting a request to send message frame to a particular slave device;
the particular slave device responds to the request to send message frame by transmitting a clear to send message frame to the master device;
the master device transmitting a command message frame which instructs the particular slave device to send data over the communication bus;
the particular slave device responds to the command message frame by transmitting an end of message frame to the master device;
the particular slave transmitting a request to send message frame to the master device;
the master device responds to the request to send message frame by transmitting a clear to send message frame to the particular slave device;
the particular slave device transmitting the data over the communication bus to the master device; and
the master device responds to receiving the data by transmitting an end of message frame to the particular slave device.

21. The method as recited in claim 18 further comprising a process by which the master device sends data to a particular slave device, said process comprising:
the master device transmitting a request to send message frame to the particular slave device;
the particular slave device responds to the request to send message frame by transmitting a clear to send message frame to the master device;
the master device transmitting the data over the communication bus to the particular slave device; and
the particular slave device responds to receiving the data by transmitting an end of message frame to the master device.
